# EUROPEAN PATENT APPLICATION

(11) **EP 4 057 141 A1**
(43) Date of publication of application: **14.09.2022**
(21) Application number: 21161284.1
(22) Date of filing: 08.03.2021
(51) Int. Cl.: G06F 9/48

(54) **A METHOD FOR OPTIMIZING IMAGE SIGNAL PROCESSING**

(71) Applicant: Beijing Xiaomi Mobile Software Co., Ltd., Beijing 100085 (CN)
(72) Inventor: FINNILÄ, Tapio, 33720 Tampere (FI); ALAHUTA, Anssi, 62100 Lapua (FI); TUOMINEN, Teemu, 33720 Tampere (FI); ESSAKY-SANKARAN, Harish, 33720 Tampere (FI)
(74) Representative: dompatent von Kreisler Selting Werner - Partnerschaft von Patent- und Rechtsanwälten mbB

(57) **Abstract**

Method and device for optimization an image signal processing, wherein the image signal processing comprises a plurality of individual sub-tasks performed in a predetermined order, wherein the method comprises the steps of: defining a first group of sub-tasks having a starting point and an end point in the predetermined order and including at least two or more sub-tasks; performing the sub-tasks in the predetermined order until the starting point of the first group; performing the sub-tasks of the first group with a predetermined first set of parameters until the end point of the first group; modifying the predetermined first set of parameters; and performing the sub-tasks of the first group with the modified first set of parameters until the end point of the first group.

## Description

The present invention relates to a method for optimization an image signal processing, a respective software and device as well as an apparatus implementing the optimized image signal processing.

Taking pictures with mobile device has become more and more popular increasing the demands on image quality and appearance. Thus, a camera sensor of such a device captures the light from a scene and transforms this information into an image meeting the expectations of the user. This transformation is performed by an image signal processing (ISP) pipeline including several algorithms or sub-tasks in order to reduce unwanted influences or disturbances of the image. Such sub-tasks include but are not limited to noise reduction, white balance, color correction, lens shading correction, defect pixel correction, gamma correction, tone mapping including adjustment of the brightness and the contrast of the image and so on. Usually, the ISP is implemented in specific software or hardware in order to accelerate the image processing. Thus, for the dedicated device or camera sensor the sub-tasks or algorithms must be adequately adapted which is usually done by simulating the ISP on a generic hardware.

A system where an image, or sequence of images like video, or any combination of these, are processed, processing time usually becomes a bottleneck as it is in vast majority of image processing tasks that are not performed by a dedicated HW. As an example of such scenarios is processing a raw frame(s) through an ISP simulator while the task of the user is to iteratively tune sub-tasks or algorithm parameters to maximize the image quality. Thus, simulating an ISP for optimization is very time consuming.

Traditionally ISP simulators have the capability to simulate images from: (i) start to end, (ii) from start to an arbitrary stopping point, and (iii) to simulate one single algorithm or sub-task in the pipe.

One of the shortcomings of the commonly known ISP simulation is that they are typically slow, successfulness of a sub-task tuning cannot be often assessed by focusing on a single block, the image cannot be assessed before enough processing is done (when a sub-task is early in the ISP), and that sub-task can hide the problems. Slowness is the most significant problem why, despite the given drawbacks, only a single sub-task is simulated for tuning or simulation is stopped after the tuned sub-task neglecting the influences on the later sub-tasks.

Thus, it is an object of the present invention to provide the method for optimized image signal processing and in particular improved image signal processing simulation.

The problem is solved by a method according to claim 1 a software according to claim 10, a device according to claim 11 and an apparatus implementing the optimized ISP according to claim 12.

In a first aspect a computer implemented method for optimization of an image signal processing is provided, wherein the image signal processing comprises a plurality of individual sub-tasks performed in a predetermined order, wherein the method comprises the steps of:
a) Defining a first group of sub-tasks having a starting point and an end point in the predetermined order and including at least two or more sub-tasks;
b) Performing the sub-tasks in the predetermined order until the starting point of the first group;
c) Performing the sub-tasks of the first group with a predetermined first set of parameters until the end point of the first group;
d) Modifying the predetermined first set of parameters; and
e) Performing the sub-tasks of the first group with the modified first set of parameters until the end point of the first group.

Therein, the sub-tasks are implemented by respective algorithms in order to transform the captured light information of the camera sensor to a final image. Thus, the image signal processing (ISP) is performed in a predetermined order or pipeline which is simulated according to the aforementioned steps. Therein, by modifying the predetermined first set of parameters, the respective sub-task is tuned in order to optimize the ISP to meet the user's demands. Therein, the predetermined first set of parameters might include a set of parameters for a dedicated sub-task or might include a set of predetermined parameters for more than one sub-task of the first group. Modifying might be performed either by a human or based on an evaluation performed by an evaluation algorithm such as artificial intelligence or machine learning. However, the present invention is not limited and in particular not directed to a specific way of modifying and optimizing the parameters. However, due to defining the respective sub-tasks to be tuned in a group preferably including depending on the sub-tasks, the result of the modified parameters can be directly evaluated after simulation of the group and unwanted effects and influences can be excluded. In particular, it is not necessary to either simulate all sub-tasks of the ISP pipeline from its beginning to its end which is time-consuming, nor is it necessary to limit the simulation to single and individual sub-tasks. Thus, the simulation process is expedited since not for every step of tuning the complete ISP need to be simulated and at the same time simulation is not limited to the one sub-task to be tuned leading to unwanted and unpredictable results.

Preferably, the aforementioned steps (d) and (e) are repeated at least one time and more preferably several times wherein the modified first set of parameters of step (e) is further modified in the repeated step (d) until optimization of the dedicated sub-task or sub-tasks of the first group is completed. Thus, optimization can be performed as an iterative process wherein only the respective sub-tasks of the first group are repeatedly simulated at least one time and preferably several times until the desired tuning result is achieved. Therein, the steps are repeated until a modified first set of parameters is found which provides the desired result. The first set of parameters is used as final first set of parameters for the respective sub-task or sub-tasks of the first group and might be used either by the simulation for simulating the remaining sub-tasks in the ISP pipeline or used in the final product implementing the optimized ISP.

Preferably, before step (c) the result of the last sub-task before the first group is cached and used as starting point for performing simulation of the sub-tasks of the first group.

Preferably, after step e) the method may comprise the steps of:
f) Defining a second group of sub-tasks including at least two sub-task, wherein at least one sub-task is different to the sub-tasks of the first group, wherein the second group having a starting point and an end point in the predetermined order;
g) Performing the sub-tasks of the second group with a predetermined second set of parameters until the end point of the second group;
h) Modifying the predetermined second set of parameters; and
i) Performing the sub-tasks of the second group with the modified second set of parameters until the end point of the second group.

Thus, by a second group, another dedicated sub-task to be tuned can be defined as being included in the second group and tuned again in a process similar as described before. Therein, the predetermined second set of parameters are a set of parameters for a single dedicated sub-task within the second group of sub-tasks. Alternatively, the second set of parameters include parameters for more than one sub-task of the second group of sub-tasks. Thus, by the second group, a second dedicated sub-tasks to be tuned can be defined by simulating the ISP from the beginning to its end and be tuned without repeatedly simulating the whole ISP.

Preferably, steps (h) and (i) are repeated at least one time and preferably several times, wherein for each repetition a modified second set of parameters is defined and used to perform the sub-tasks of the second group. Thus, optimization can be performed as iterative process, wherein only the respective sub-tasks of the second group are repeatedly simulated at least one time and preferably several times until the desired tuning result is achieved. Therein, the steps are repeated until a modified second set of parameters is found which provides the desired result. This second set of parameters is used as final second set of parameters for the respective sub-task or sub-tasks of the second group and might be used either by the simulation for simulating the remaining sub-tasks in the ISP pipeline or used in the final product implementing the optimized ISP.

Preferably, the second group is arranged at least partially after the first group. This means that at least one sub-task of the second group is after the first group in the predetermined order of sub-tasks and thus not belonging to the first group. Alternatively or additionally, the second group is arranged at least partially parallel to the first group. Since the ISP pipeline might also include branches, sub-tasks might be parallel, wherein the first group might form at least partially a first branch and the second group might form at least one of the sub-tasks of the parallel branch. Therein, for all alternatives, the first group and the second group might overlap and share common sub-tasks which belong to the first group as well as to the second group.

Preferably, the last sub-task of the first group is the first sub-task of the second group. Alternatively, the directly subsequent sub-tasks of the first group which does not belong to the first group anymore is the first sub-tasks of the second group. Thus, the second group directly follows the first group.

Preferably, each of the sub-tasks of the ISP are assigned to one or more groups in order to be able to tune the respective sub-tasks by each of the groups.

Preferably, each of the groups comprises at least one sub-task to be tuned.

Preferably, at least one group and, more preferably, each group comprises at least one and, in particular, all dependent sub-tasks being dependent on the processing result of the sub-task to be tuned. Thus, modifying the first set of parameters for tuning a dedicated sub-task within the first group also might influence the processing result of the dependent sub-tasks. Combining these dependent sub-tasks in the first group results in iteratively simulating their common behavior in the ISP. Unwanted side-effects caused by tuning a dedicated sub-task and neglecting its dependent sub-tasks are avoided.

Preferably, after the end point of the last group, i.e. the last sub-tasks of the last group, the remaining sub-tasks are performed until the end of the ISP.

In another aspect of the present invention a computer program is provided comprising instructions, when the program is executed by a computer, cause the computer to carry out the steps of the method described above.

In another aspect of the present invention a device is provided comprising a processor and a non-volatile memory storage medium storing machine executable instructions, wherein the machine executable instructions are executable by the processor and cause the processor to perform the steps of the method described above.

In another aspect of the present invention, an apparatus is provided comprising an image sensor to capture image data and a processor connected to the image sensor wherein the processor is configured to perform an image signal processing optimized by the method as described above. Thus, the ISP can be implemented as dedicated hardware or as software, wherein the optimized sets of parameters for each of the tuned sub-tasks are implemented and used to transform the light information captured by the image sensor into a final image.

The present invention provides an improvement to simulation of ISP avoiding the shortcomings of currently known simulation methods such as slowness due to simulating the whole ISP for each individual tuning of each sub-task in the ISP, or singling out individual sub-tasks and limiting the simulation to these individual sub-tasks leading to drawbacks and unwanted results caused by dependencies within the pipeline between individual sub-tasks. Hence, by the present invention more precise and predictable simulation results are achieved and all depended sub-tasks being depended on the tuned sub-task are considered and simulated before evaluating the result of the tuning of the respective sub-tasks. However, by repeating simulation only of the respective groups including the sub-tasks to be tuned and at least its dependent sub-tasks, unnecessary simulation of the sub-tasks are avoided.

The invention is further described in more details with reference to the accompanying figures.

The figures show:
- Figure 1: an example of an ISP,
- Figure 2: steps of the method according to the present invention,
- Figure 3: an ISP implementing the method according to the present invention,
- Figure 4: steps of the method according to another embodiment,
- Figure 5A to 5D: an ISP implementation for different tuned sub-tasks and
- Figure 6: an apparatus implementing the optimized IPS.

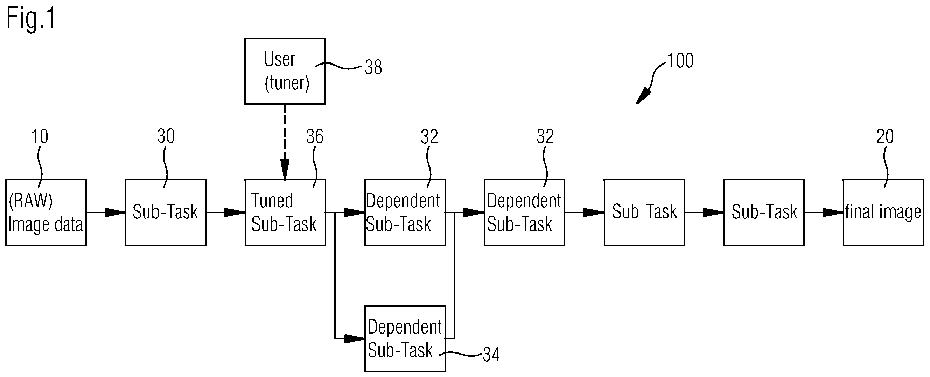

Figure 1 shows an example of an ISP pipeline transferring the raw image data 10 to the final image 20, thereby transforming the pure light information, captured by a camera sensor or image sensor, into an image fulfilling the user's demands with respect to quality and appearance. Therein, the ISP comprises several sub-tasks 30 performing different tasks within the ISP for the transformation of the raw image data 10 to the final image data 20. Therein, the sub-tasks might be associated with noise reduction, white balance, color correction, color interpolation, lens shading correction, defect pixel correction, gamma correction, tone mapping, contrast adjustment and brightness adjustment and the like which is necessary in order to meet the users demands on the final image 20. The present invention is not limited to a specific order of the sub-tasks nor to specific sub-tasks itself. Therein, the sub-tasks might be implemented as algorithms. As exemplified in figure 1, the sub-tasks 30 are carried out in a predetermined order and also might comprise branches 34, wherein different sub-tasks are carried out in parallel. Further, the present invention is not limited to a specific number of sub-tasks or the number of parallel branches.

In order to adapt an ISP to a new device, new camera sensor, new hardware or the like, the ISP must be tuned to provide the desired results. Thus, a set of parameters for a respective sub-task 36 is tuned until the desired result is achieved. Therein, the parameters describe a specific behavior or result of the respective sub-task. Tuning might be repeated for one or more of the other sub-tasks as well.

However, it is common that the result of the tuning cannot be viewed right after the respective sub-task 36 that is tuned but requires other sub-tasks to run which can be considered as dependent sub-tasks 32. The tuned sub-task 36 is naturally dependent on prior sub-task tunings. Thus, in the prior art, the process is such that sub-tasks are tuned one by one, following a certain tuning guideline that is specific to the ISP and the sub-task at hand. This is very time-consuming process that typically slows the time to market and further relies critically on the experience of the user 38 tuning the ISP.

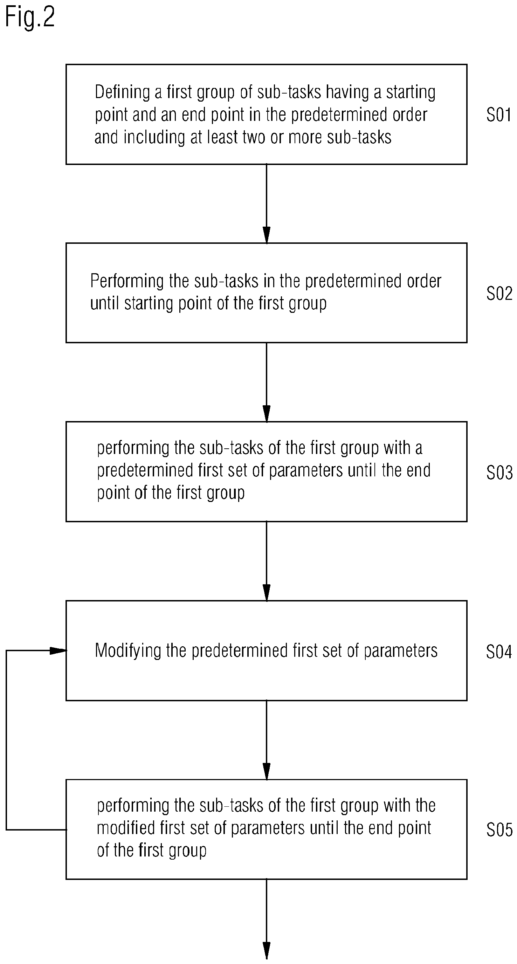

Figure 2 shows the steps of the present invention:
In step S01, a first group of sub-tasks is defined as having a starting point and an end point in the predetermined order and including at least two or more sub-tasks.

In step S02, the sub-tasks are performed or simulated in the predetermined order until starting point of the first group.

In step S03, the sub-tasks are of the first group are performed or simulated with a predetermined first set of parameters until the end point of the first group.

In step S04, the predetermined first set of parameters is modified.

In step S05, the sub-tasks of the first group are performed or simulated with the modified first set of parameters until the end point of the first group.

Therein, the steps S04 and S05 can be repeated as indicated in Fig. 1 in order to determine an optimized set of parameter for the sub-task to be tuned which is then used for the further steps of tuning the remaining sub-tasks and also for implementing the ISP in an apparatus.

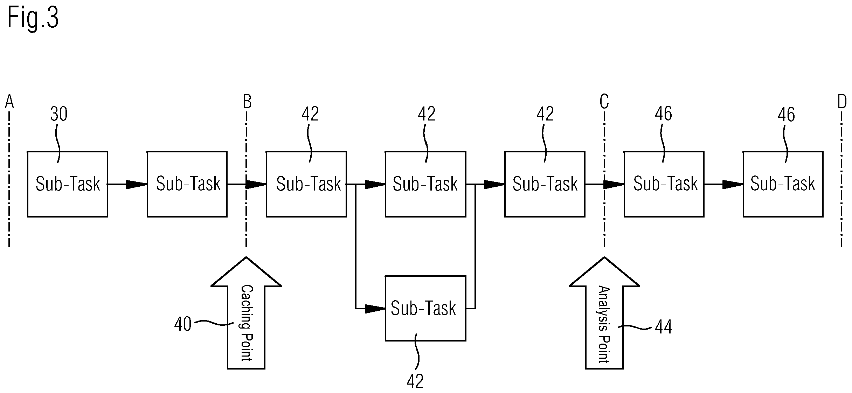

Fig. 3 exemplifies the process of simulation and optimization a dedicated sub-task. Therein, the ISP of Fig. 3 comprises a certain number of sub-tasks 30.
- When the first run from the beginning of the pipeline (A) is done the simulation halts at point (B) and the results at this point are cached. Point (B) indicates the starting point of the first group, wherein the first group in the present example comprises several sub-tasks 42 including a branch of the ISP.
- After this, the user can do any modifications to the sub-tasks 42 of the first group or their parameters between points (B) and (C) modifying the respective set of parameters. One or many of the sub-tasks between points (B) and (C) can be tuned simultaneously using this method making the pipeline and tuning tool architecture more flexible compared to the prior art.
- After these wanted modifications are done, the simulation can be continued, and it will run until the point (C) and the results can be analyzed.
- If the user sees that the modification done between points (B) and (C) in the first group are not producing satisfactory results he/she can further modify the algorithm/parameters and repeat simulation of the region between point (B) to (C).
- After the tuning results for the first group between points (B) and (C) are satisfactory, the user can move these trim points forward in the pipeline if wanted. This will avoid the need to repeat simulations between points (A) and (C) which saves time. After this the above-mentioned steps can be repeated by defining another group including two or more sub-tasks.
- After the results are pleasing, the simulation can be continued until the end of the pipe (D).

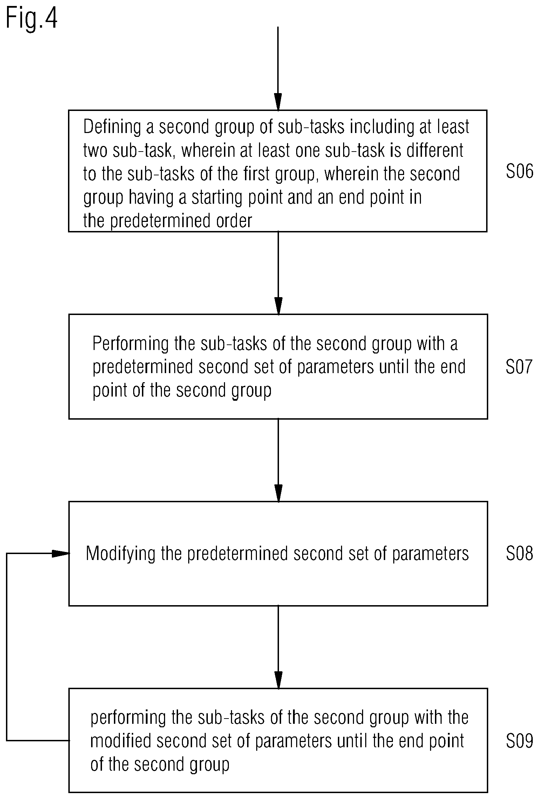

Referring to Figure 4 showing the steps of defining a second group with at least two sub-tasks, wherein these steps are performed subsequent or in parallel to the steps S01 to S05 described above with reference to Fig. 2. Therein, the second group comprises at least one sub-task to be tuned and may also include one or more dependent sub-task being dependent on the sub-task to be tuned. In step S06 a second group of sub-tasks is defined including at least two sub-task, wherein at least one sub-task is different to the sub-tasks of the first group, wherein the second group having a starting point and an end point in the predetermined order.

In step S07 the sub-tasks of the second group are performed or simulated with a predetermined second set of parameters until the end point of the second group.

In step S08 the predetermined second set of parameters is modified.

In step S09 the sub-tasks of the second group are performed or simulated with the modified second set of parameters until the end point of the second group. Therein, the steps S08 and S09 can be repeated as indicated in Fig. 3 in order to determine an optimized set of parameter for the sub-task to be tuned which is then used for the further steps of tuning the remaining sub-tasks in the ISP and also for implementing the ISP in an apparatus.

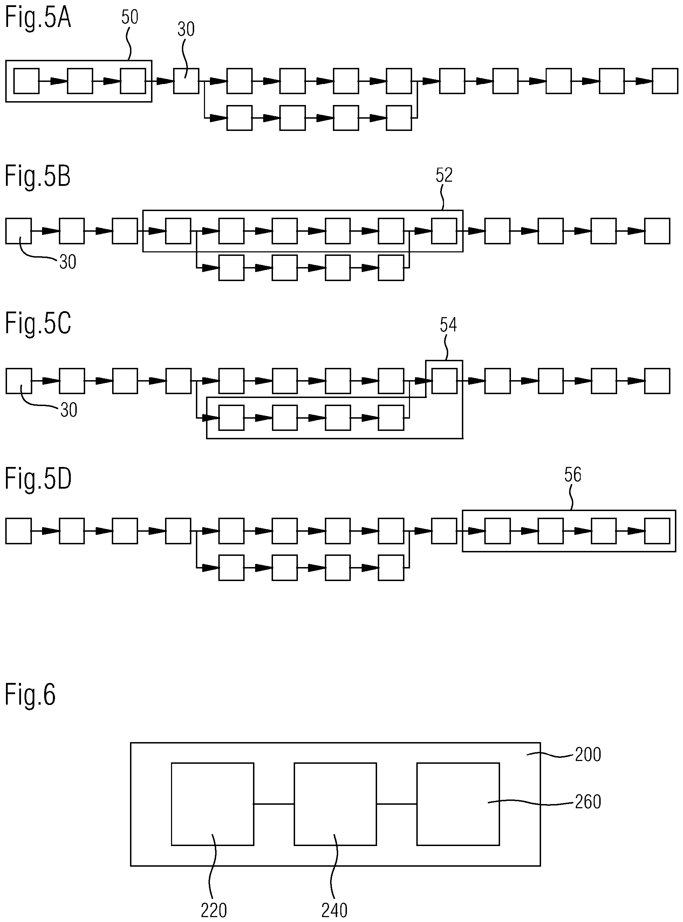

Referring to figures 5A to 5D showing the exemplified process of tuning an ISP, wherein the ISP has several sub-tasks 30 carried out in a predetermined order to transform raw data to the final image analogously to figure 1.

Therein, according to figure 5A, a first group 50 might be defined including a first sub-task to be tuned. In the example of the figure 5A the first group 50 comprises three sub-tasks. Therein, at least one of the sub-tasks of the first group 50 might be tuned. Alternatively, more than one or all sub-tasks of the first group 50 might be tuned, i.e. parameters for executing the sub-tasks are modified either by a human user or due to a machine evaluation for example by artificial intelligence or machine learning. Further, the first group 50 might comprise one or more dependent sub-tasks being dependent on the one or more sub-tasks to be tuned. In order to optimize the parameters and find a final set of parameters for the respective sub-tasks of the first group 50, the sub-tasks of the first group 50 are iteratively repeated/simulated, wherein for each step the respective set or sets of parameters are modified until the desired result is achieved defined by the final set of parameters for the first group 50. Subsequently, as depicted in figure 5B, a second group 52 is defined including in the example six sub-tasks of a first branch of the ISP and including one or more sub-tasks to be tuned. Further the second group 52 might include one or more dependent sub-tasks being dependent on the sub-tasks to be tuned. Therein, it is noted that the first sub-task of the second group 52 is the subsequent sub-task of the last sub-task of the first group 50 such that there is no overlap between the first group and the second group. The sub-tasks of the second group 52 are repeatedly simulated in order to find the final set of parameters for the sub-tasks to be tuned such that the result of the second group of sub-tasks are providing the desired results. Subsequently, a third group 54 is defined as exemplified in figure 5C comprising four sub-tasks of the parallel branch and a fifth sub-task after recombination of the branches. Therein it is noted that the fifth sub-task of the third group 54 is also included as the last sub-task in the second group such that the second group 52 and the third group 54 are at least partially overlapping. The sub-tasks of the third group 54 are repeatedly simulated in order to find the final set of parameters for the sub-tasks to be tuned such that the result of the third group of sub-tasks are providing the desired results. Subsequently, a fourth group 56 is defined as exemplified in figure 5D comprising four sub-tasks. The sub-tasks of the fourth group 54 are repeatedly simulated in order to find the final set of parameters for the sub-tasks to be tuned such that the result of the fourth group of sub-tasks are providing the desired results. Therein, in the example of Figs. 5A to 5D, the sub-tasks of the fourth group 56 provide the final image of the optimized ISP.

Example of figures 5A -5D is of course not limited to the shown number of sub-tasks and branches. Further, the selected groups are not limited to any specific number and every group can comprise two or more sub-tasks 30.

Further, the groups may overlap, follow subsequently or are separated by one or more independent sub-tasks which can be simulated in isolation as known in the prior art. Therein, these isolated sub-tasks may not comprise any dependent sub-tasks. Further, the ISP as shown in figures 5A-5D ends with the fourth group 56. However, the present invention is not limited to the situation that an ISP ends with a specific group. Instead, in another embodiment, the fourth group may be followed by one or more additional sub-tasks either being isolated sub-tasks or sub-tasks with dependent sub-tasks, or may be followed by further groups of sub-tasks. Therein, each group may comprise at least one sub-task to be tuned and may or may not comprise dependent claims dependent on the sub-tasks to be tuned.

Hence, the defined groups can be tailored to the specific dependencies of the sub-tasks to be tuned in order to avoid redundant simulations including simulations of all sub-tasks in the ISP. Further, limiting the simulation to single sub-tasks to be tuned is avoided, neglecting dependent sub-tasks which might lead to unwanted results. Hence, the overall simulation process can be speed up since desired results can be acquired more quickly due to improved evaluation capabilities of the modified sets of parameters for each of the tuned sub-tasks.

Figure 6 showing an apparatus such as a terminal device 200 including a camera sensor or image sensor 220 which is connected to a processor 240. Further, the processor 240 is connected to a memory storage 260. The memory storage 260 stores the final sets of parameters found by the simulation described above in order to provide an optimized ISP transforming the raw image data captured by the image sensor 220 and providing the final image to a user of the terminal device 200. Therein, the processor 240 with memory 260 can be implemented as dedicated image processor implementing the ISP in hardware or can implement the ISP in software stored in the storage memory 260 processed by the processor 240.

## Claims

1. Computer implemented method of optimization an image signal processing, wherein the image signal processing comprises a plurality of individual sub-tasks performed in a predetermined order, wherein the method comprises:
a) Defining (S01) a first group of sub-tasks having a starting point and an end point in the predetermined order and including at least two or more sub-tasks;
b) Performing (S02) the sub-tasks in the predetermined order until the starting point of the first group;
c) Performing (S03) the sub-tasks of the first group with a predetermined first set of parameters until the end point of the first group;
d) Modifying (S04) the predetermined first set of parameters; and
e) Performing (S05) the sub-tasks of the first group with the modified first set of parameters until the end point of the first group.

2. Method according to claim 1, wherein steps d) and e) are repeated at least one time and preferably several times.

3. Method according to claims 1 or 2, wherein before step c) the result of the last sub-task before the group is cached.

4. Method according to any of claims 1 to 3, wherein the method comprises:
f) Defining (S06) a second group of sub-tasks including at least two sub-task, wherein at least one sub-task is different to the sub-tasks of the first group, wherein the second group having a starting point and an end point in the predetermined order;
g) Performing (S07) the sub-tasks of the second group with a predetermined second set of parameters until the end point of the second group;
h) Modifying (S08) the predetermined second set of parameters; and
i) Performing (S09) the sub-tasks of the second group with the modified second set of parameters until the end point of the second group.

5. Method according to claim 4, wherein steps h) and i) are repeated at least one time and preferably several times.

6. Method according to claims 4 or 5, wherein the second group is arranged at least partially after the first group and/or at least partially parallel to the first group in the predetermined order.

7. Method according to any of claims 4 to 6, wherein the last sub-task of the first group is the first sub-task of the second group or the directly subsequent sub-task of the first group is the first sub-task of the second group.

8. Method according to any of claims 4 to 6, wherein before step g) the result of the last sub-task before the group is cached.

9. Method according to any of claims 1 to 8, wherein after the end point of the last group, the remaining sub-tasks are performed until the end of the predetermined order.

10. A computer program comprising instructions, when the program is executed by a computer, cause the computer to carry out the steps of the method according to any of claims 1 to 9.

11. A data processing device comprising a processor configured to perform the steps of the method according to any of claims 1 to 9.

12. Apparatus with an image sensor to capture image data, a processor connected to the image sensor, wherein the processor is configured to perform an image signal processing optimized by the method according to any of claims 1 to 9 or by a software according to claim 10 or by a device according to claim 11.
